Europäisches Patentamt

European Patent Office

Office européen des brevets

(11) Veröffentlichungsnummer: **0 160 727**

**A1**

(12) # EUROPÄISCHE PATENTANMELDUNG

(21) Anmeldenummer: **84105312.7**

(51) Int. Cl.⁴: **B 23 B 5/28**

(22) Anmeldetag: **10.05.84**

(43) Veröffentlichungstag der Anmeldung:
**13.11.85 Patentblatt 85/46**

(84) Benannte Vertragsstaaten:
**DE FR GB IT**

(71) Anmelder: **Wilhelm Hegenscheidt Gesellschaft mbH**
**Neusser Strasse 3**
**D-5140 Erkelenz(DE)**

(72) Erfinder: **Dombrowski, Theodor, Dipl.-Ing.**
**Anton-Heinen-Strasse 43**
**D-5140 Erkelenz(DE)**

(72) Erfinder: **Wittkopp, Helmut, Dipl.-Ing.**
**Cusanushof 87**
**D-5140 Erkelenz(DE)**

(72) Erfinder: **Klosterhalfen, Hartwig, Dipl.-Ing.**
**Am Weinberg 7**
**D-5160 Düren(DE)**

(72) Erfinder: **Kluft, Werner, Dr.-Ing.**
**Jülicher Strasse 336**
**D-5100 Aachen(DE)**

(72) Erfinder: **Fabry, Jochen, Dr.-Ing.**
**Tucherstrasse 1**
**D-8501 Rückersdorf(DE)**

(72) Erfinder: **Lung, Dieter, Dipl.-Ing.**
**Postropsweg 27**
**D-5120 Herzogenrath(DE)**

(74) Vertreter: **Liermann, Manfred**
**Josef-Schregel-Strasse 19**
**D-5160 Düren(DE)**

(54) **Verfahren zum Reprofilieren von Profilen von Radsätzen.**

(57) Bie bekannten Verfahren zum Reprofilieren von Profilen von Radsätzen durch eine Drehbearbeitung entstehen überwiegend Fließspäne, die den Arbeitsprozeß behindern, die Beschädigungen an der Maschine verursachen können und die die ständige Aufmerksamkeit des Bedienungspersonals erfordern. Die Erzielung kurzer Bruchspäne durch geeignete Gestaltung der Schneidengeometrie ist wegen des ständigen Wechsels der Schnittdaten bei der Reprofilie rung solcher Werkstücke nicht möglich. Zur Beseitigung dieses Problems wird daher nach der Erfindung vorgeschlagen, daß das Profil in wechselndem Einsatz von Hartmetallschneidstoffen und Hochleistungsschneidstoffen überdreht wird unter Anpassung der Schnittdaten an den jeweils momentan verwendeten Schneidstoff, wobei der Hochleistungsschneidstoff in den Profilbereichen eingesetzt wird, die eine Stoßbelastung des Schneidstoffes nicht erwarten lassen, während in den übrigen Bereichen die Hartmetallschneidstoffe eingesetzt werden.

FIG.3

EP 0 160 727 A1

"Verfahren zum Reprofilieren von Profilen von Radsätzen"

Die Erfindung betrifft ein Verfahren zum Reprofilieren von Profilen von Radsätzen durch eine Drehbearbeitung. Diese Form der Reprofilierung von Profilen von Radsätzen ist seit langem bekannt und hat sich weltweit durchgesetzt. Als Schneidstoffe werden hierbei z.B. Hartmetalle verwendet, mit denen es möglich geworden ist, die Profile der Räder eines Radsatzes in recht kurzer Zeit und sehr genau zu reprofilieren.

Bei der vorbeschriebenen Drehbearbeitung entstehen jedoch nachteiligerweise überwiegend lange Fließspäne, die den Arbeitsprozeß behindern, Beschädigungen an der Maschine hervorrufen können und die ständige Aufmerksamkeit des Drehers erfordern. Darüber hinaus macht die Beseitigung der bei der Reprofilierung angefallenen Fließspäne Schwierigkeiten.

Als weitere Form einer zerspanenden Bearbeitung zur Reprofilierung der Profile von Radsätzen ist die Fräsbearbeitung dieser Profile durch umlaufende Profilfräser bekannt. Diese Form der Bearbeitung hat den Vorteil, nur kurze Späne zu erzeugen, so daß die mit Fließspänen zusammenhängenden Probleme hierdurch beseitigt sind. Allerdings ist nachteiligerweise eine solche Fräsbearbeitung zeitaufwendig, in der Regel nicht genügend genau und erzeugt eine reprofilierte Oberfläche, die nur schwer meßbar ist.

Wegen der wirtschaftlichen Nachteile hat sich daher die Fräsbearbeitung weltweit nicht in dem Umfange durchgesetzt wie die Drehbearbeitung bei der Reprofilierung der Profile von Radsätzen.

Es ist weiterhin bei der Reprofilierung von Profilen von Radsätzen durch eine Drehbearbeitung mit der DE-OS 27 13 997 bereits bekannt geworden an unterschiedlichen Profilbereichen der Räder zu reprofilierender Radsätze mit unterschiedlichen Werkzeugen zu arbeiten. Der Unterschied der Werkzeuge liegt in deren Schneidengeometrie, wobei die Veränderung der Schneidengeometrie einerseits der Anpassung an die Geometrie des Profilbereichs, der jeweils reprofiliert werden soll, dient und andererseits der Anpassung an im Gesamtprofilbereich auftretende unterschiedliche Werkstoffhärten. Im Profilbereich der Räder von Radsätzen treten Flachstellen und Hartstellen auf, die örtlich eng begrenzt sind und daher während eines Durchlaufs eine Stoßbelastung auf die eingesetzte Hartmetallschneidplatte ausüben. Solche Hartmetallschneidplatten ebenso wie auch herkömmliche Schneidstoffe können dieser Stoßbelastung widerstehen. Ebenso aber muß es möglich sein, Schweißraupen aus Reparaturschweißungen, beispielsweise im Bereich der Spurkranzflanke, zu durchschneiden. Auch dies gelingt mit den genannten Schneidstoffen.

Weiterhin tritt bei einem gelaufenen Radsatz sehr häufig im Bereich der äußeren Stirnseite eines Rades ein recht großer und harter Überwalzungsgrad auf, der ebenfalls eine hohe Belastung für solche Schneidstoffe darstellt, von diesen jedoch beherrscht wird.

Es sind weiterhin Hochleistungsschneidstoffe, z.B. Oxydkeramik, bekannt, die bei einem Zerspanungsprozeß eine erheblich höhere Schnittgeschwindigkeit als Hartmetallschneidstoffe zulassen. Diese Hochleistungsschneidstoffe sind jedoch stoßempfindlich und sind daher nur bei kontinuierlichem Betrieb einsetzbar. Liegt aber ein kontinuierlicher Betrieb vor, erlauben sie gegenüber den bekannten Hartmetallschneidstoffen erheblich höhere Arbeitsgeschwindigkeiten und es wird bei Einsatz dieser Hochleistungsschneidstoffe gegenüber dem Einsatz von z.B.

Hartmetallschneidstoffen eine erhebliche Zeiteinsparung erreicht. Hochleistungsschneidstoffe werden also da eingesetzt, wo eine Zeitersparnis sowie hohe Oberflächenqualität erreicht werden soll.

Bei der Reprofilierung von Profilen von Radsätzen durch eine Drehbearbeitung ist somit das Problem der Fließspäne ungelöst.

Der Erfindung liegt daher die Aufgabe zugrunde, ein Verfahren der eingangs beschriebenen Art vorzuschlagen, mit dem es möglich wird, kurze Bruchspäne bei der Drehbearbeitung der gelaufenen Profile der Räder von Radsätzen zu erreichen.

Diese Aufgabe ist bei einem Verfahren der genannten Art dadurch gelöst, daß das Profil in wechselndem Einsatz von stoßunempfindlichen Schneidstoffen und Hochleistungsschneidstoffen überdreht wird unter Anpassung der Schnittdaten an den jeweils momentan verwendeten Schneidstoff, wobei der Hochleistungsschneidstoff in den Profilbereichen eingesetzt wird, die eine Stoßbelastung des Schneidstoffes nicht erwarten lassen, während in den übrigen Bereichen die stoßunempfindlichen Schneidstoffe eingesetzt werden.
Durch diese kombinierte Verwendung von herkömmlichen stoßunempfindlichen Schneidstoffen und Hochleistungsschneidstoffen, wie beispielsweise Oxydkeramik, gelingt es, die Stärken beider Schneidstoffe miteinander zu kombinieren und gleichzeitig die Schwächen beider Schneidstoffe zu eliminieren. Der Einsatz des Hochleistungsschneidstoffes in den Profilbereichen, in denen eine Stoßbelastung nicht zu erwarten ist, die also eine relativ gleichmäßig verteilte Härte aufweisen und den Schneidstoff relativ gleichmäßig belasten, kann mit den für solche Hochleistungsschneidstoffe typischen Zerspanungsdaten zerspant werden, wodurch kurze Bruchspäne erzeugt werden können. Fließspäne können beim Einsatz solcher Hochleistungsschneidstoffe und richtiger Wahl der Schnittdaten sicher vermieden werden. Diese Hochleistungsschneidstoffe würden jedoch in den Profilbereichen in denen eine Stoßbelastung auftritt, zerstört werden. Sie werden daher in den Bereichen gegen stoßunempfindliche Schneistoffe, z.B. gegen die bekannten Hartmetallschneidstoffe, ausgetauscht, die nun ihrerseits mit veränderten Zerspanungsdaten zum Einsatz kommen. Die Stoßbelastung kann ausgelöst werden z.Beispiel durch harte Stellen, durch Flachstellen oder auch durch Schweißraupen oder Grat. Diesen Anforderungen sind die als Beispiel genannten Hartmetallschneidstoffe gewachsen, wobei der beschriebene Werkstoffzustand in den genannten Profilbereichen gleichzeitig mindestens für relativ kurze Späne auch beim Einsatz von stoßunempfindlichen Schneidstoffen sorgt, so daß auch in diesem Bereich mindestens relativ kurze Bruchspäne entstehen.

Nach einer Ausgestaltung der Erfindung ist vorgesehen, daß das Vorhandensein von Stoßbelastungen auslösenden Stellen und deren Anordnung im Profilbereich vor oder während der Drehbearbeitung geprüft wird und in Abhängigkeit von diesem Prüfungsergebnis die Werkzeugzuordnung zu den unterschiedlichen Profilbereichen und die Auswahl und Einstellung der zuzuordnenden Schnittdaten erfolgt. Mit dieser Maßnahme gelingt es, über den gesamten Profilbereich Bruchspäne zu erzeugen durch den wechselweisen Einsatz von Hochleistungsschneidstoffen oder stoßunempfindlichen Schneidstoffen und es gelingt gleichzeitig, durch Eingrenzung des jeweiligen Profilbereichs, in dem die jeweiligen Schneidstoffe eingesetzt werden sollen, eine Arbeitsoptimierung zu erreichen.

Nach einer alternativen Ausgestaltung der Erfindung ist vorgesehen, daß in den Profilbereichen, in denen nach der Erfahrung mindestens häufig Stoßbelastungen auftreten, unabhängig vom tatsächlichen Zustand dieser Profilbereiche im Einzelfall, stets stoßunempfindliche Schneidstoffe eingesetzt werden, während in den übrigen Profilbereichen stets Hochleistungsschneidstoffe eingesetzt werden. Die in einem bestimmten Gleisnetz laufenden Radsätze weisen je nach ihrer regelmäßigen Verwendung ganz bestimmte Verschleißcharakteristika und eine ganz bestimmte Verteilung von solchen Stellen auf, die eine Stoßbelastung erzeugen, mit der der Schneidstoff belastet wird. Diese Eigenschaften sind aus der Erfahrung bekannt und können daher auch als solche einfach vorausgesetzt werden. Es kann dann eine enstprechende Prüfung des Werkstoffzustandes am Radsatz entfallen.

Schließlich ist noch nach einer weiterentwickelnden Ausgestaltung der Erfindung vorgeschlagen, daß in den unterschiedlichen Profilbereichen, die von Hochleistungsschneidstoff einerseits und von stoßunempfindlichem Schneidstoff andererseits bearbeitet werden, die jeweils eingesetzte Schneidengeometrie und Spanleitstufe den Zerspanungsbedingungen des zu bearbeitenden Profilbereiches angepaßt ist. Hierdurch gelingt es Spanbruch, Oberflächenqualität und Zeitbedarf jeweils zu optimieren. Allerdings macht dies den Einsatz von Schneidplatten unterschiedlicher Geometrie mindestens bei den stoßunempfindlichen Schneidstoffen erforderlich, die in ihrer Schneidengeometrie jeweils an die Zerspanungssituation des Profilbereichs angepaßt sind, in dem sie zum Einsatz kommen sollen.

Die Erfindung soll nun anhand der beigefügten Zeichnungen näher erläutert werden.

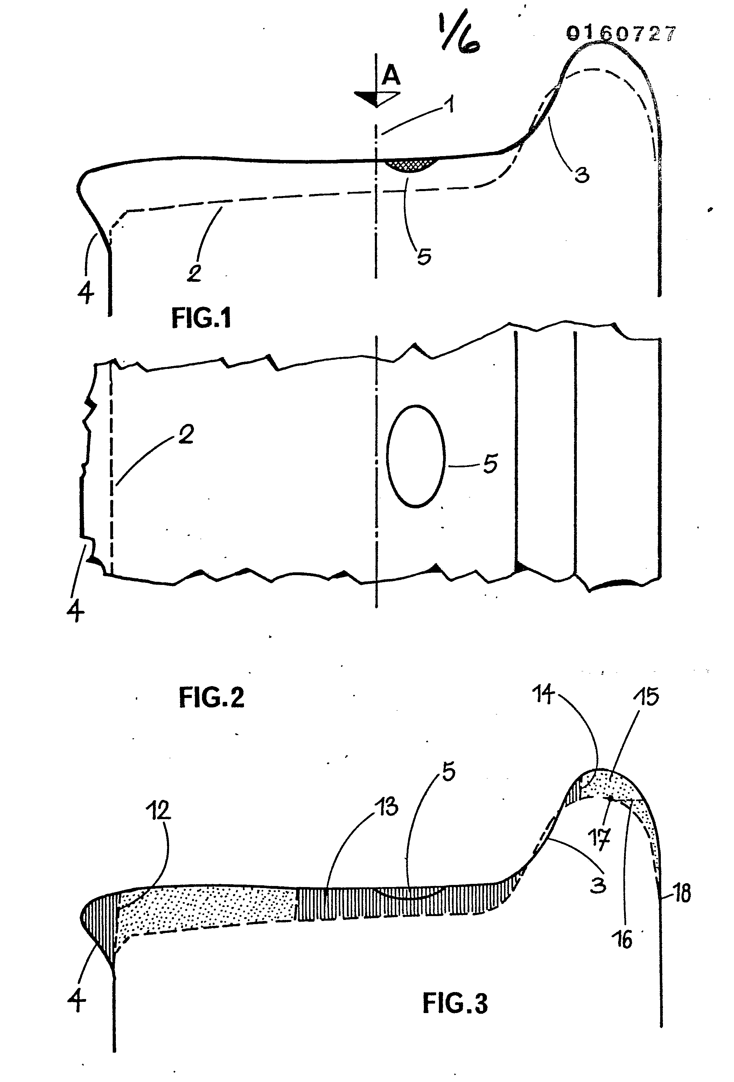

Es zeigen:      Figur 1  einen Querschnitt durch einen Radreifen mit Überwalzung und sogen. schwarzer Stelle an der Lauffläche

Figur 2  Ansicht in Richtung des Pfeils A

- 8 -    0160727

nach Figur 1

Figur 3  Ansicht wie Figur 1, jedoch mit Eintragung einer Schnittfolge nach dem erfindungsgemäßen Verfahren

Figur 4  Bearbeitungswerkzeug

Figur 5  Bearbeitungswerkzeug

Figur 6  Bearbeitungswerkzeug

Figur 7  Darstellung wie Figur 3 jedoch mit veränderter Schnittfolge

Figur 8  Schneidplatte für geringe Spantiefe

Figur 9  Schnitt I-I nach Figur 8

Figur 10 Schneidplatte nach Figur 8 in Arbeitsposition

Figur 11 Schneidplatte für einen Spantiefenbereich der sich an den Spantiefenbereich für eine Schneidplatte nach Figur 8 anschließt

Figur 12 Schnitt II-II nach Figur 11

Figur 13 Schneidplatte nach Figur 11 in Arbeitsposition

Figur 14 Schneidplatte für einen sich an den Arbeitsbereich der Schneidplatte nach Figur 11 anschließenden Spantiefenbereich

Figur 15 Schnitt III-III nach Figur 14

Figur 16 Schneidplatte nach Figur 14 in Arbeitsposition

Figur 17 Seitenansicht eines Kopiersupports

Figur 18 Ansicht in Richtung des Pfeils B nach Figur 17

Figur 19 Hydraulikschaltplan für einen Kopiersupport nach Figur 17

In Figur 1 ist mit der dick durchgezogenen Linie ein Verschleißprofil eines laufenden Radsatzes im Querschnitt dargestellt. Zur Erzeugung eines korrekten Profils muß dieses Verschleißprofil bis auf die Linie des gestrichelten Profils, das das Neuprofil 2 darstellt, zerspant werden. Um die Wiederherstellung des Neuprofils 2 mit möglichst geringer Zerspanung zu erreichen, wird in bekannter Weise nur soviel zerspant, daß dieses Neuprofil 2 am Verschleißprofil gerade so tangiert. Dieses Tangieren wird so knapp gehalten, daß eine sogen. schwarze Stelle 3 als Rest des Verschleißprofils noch übrig bleibt.

An der Außenkante des Verschleißprofils ist ein durch die häufige Überwalzung erzeugter Grad 4 mit gezacktem Rand, wie Figur 2 zeigt, vorhanden.

Die strichpunktierte Linie 1 stellt die Meßkreisebene dar, deren Lage zu jedem Profil festgelegt ist. In dieser Meßkreisebene wird die Durchmesserbestimmung eines Rades vorgenommen.

Im Bereich dieser Meßkreisebene 1 können Hartstellen 5 auftreten die -wie Figur 2 zeigt- in aller Regel örtlich sehr begrenzt sind. Der Hartstelle 5 könnte sich ebenfalls

0160727

eine hier nicht näher dargestellte Flachstelle, beispielsweise durch Blockierbremsung entstanden, anschließen. Der
Werstoff im Bereich einer solchen Flachstelle ist ebenfalls
hart. Bei einer Flachstelle kommt jedoch als belastungserschwerend für Schneidwerkzeuge noch die plötzliche
Formunregelmäßigkeit hinzu.

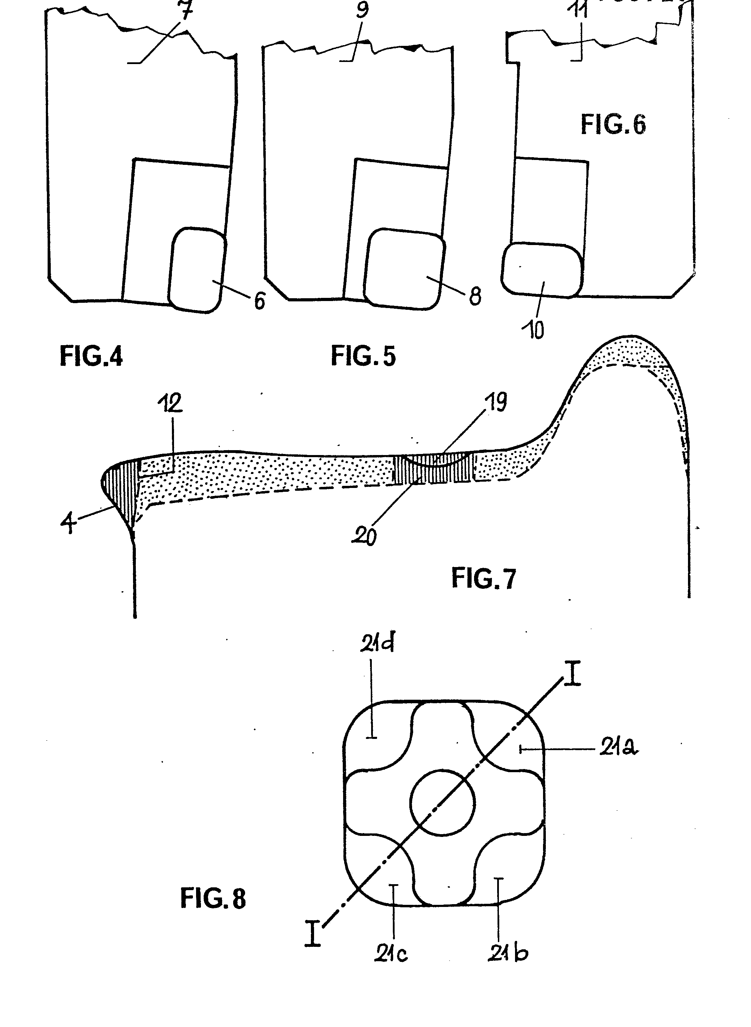

Zur Durchführung des erfindungsgemäßen Verfahrens muß nun
das Gesamtprofil in solche Profilbereiche aufgeteilt
werden, die einerseits von stoßunempfindlichen Schneidstoffen und andererseits von Hochleistungsschneidstoffen
zerspant werden sollen. Dies ist, als Beispiel einer
Aufteilung, in Figur 3 dargestellt. Die jeweils zur
Anwendung gelangenden Werkzeuge sind in den Figuren 4 bis 6
dargestellt.

Bei einem Rad, dessen Profil in Figur 3 dargestellt ist,
wird der Grat 4 mit der Werkzeugplatte 8 (Figur 5), die auf
einem Halter 9 befestigt ist, zerspant. Die Werzeugplatte 8
besteht aus zähem Hartmetall, weil der Grat 4 hart ist,
einen gezackten Rand aufweist (siehe Figur 2) und somit
einen unterbrochenen Schnitt erzeugt. Der Schneidstoff ist
daher einer Stoßbelastung unterworfen, so daß er stoßunempfindlich sein muß.
Der Schnitt mit der Werkzeugplatte 8 wird beendet, wenn die
Schneidkante der Werkzeugplatte 8 an der Außenplanfläche 12
des nicht näher bezeichneten Rades angekommen ist. An
dieser Stelle wird das Werkzeug gewechselt. Ebenso wird an
dieser Stelle die Schnittgeschwindigkeit und der Vorschub
gewechselt. Es kommt nunmehr für den in Richtung Spurkranz
gesehen sich anschließenden Bereich (in Figur 3 punktiert
dargestellt) die aus Oxydkeramik bestehende Schneidplatte 6
zum Einsatz, die auf einem Halter 7 befestigt ist (siehe
Figur 4). Die Schneidplatte 6 muß natürlich nicht unbedingt
aus Oxydkeramik bestehen, sondern sie kann auch aus anderen
Hochleistungsschneidstoffen mit vergleichbaren Eigenschaften bestehen.

Der Schnitt mit der Schneidplatte 6 wird beendet, wenn die Schneidkante dieser Schneidplatte den Bereich 13 erreicht hat, in dem sich, z.B. erfahrungsgemäß, Hartstellen 5 befinden. In diesem Bereich 13 wird wieder die Schneidplatte 8 eingesetzt, die in der Lage ist, die an der Hartstelle 5 auftretende Stoßbelastung zu ertragen.

Wegen der verbleibenden schwarzen Stelle 3 und der im Bereich der Spurkranzflanke möglicherweise vorhandenen Aufschweißungen und der hieraus resultierenden Stoßbelastungen für das Werkzeug muß der Schnitt mit der Schneidplatte 8 bis zum Bereich 14 des Profils geführt werden. In dem sich anschließenden Bereich 15 (in Figur 3 wiederum punktiert dargestellt), wird wieder die Oxydkeramikschneidplatte 6 zum Einsatz gebracht, da in diesem Bereich nur noch kaltverformter Werkstoff vorliegt. Allerdings wird es dennoch notwendig, auf die Linie 16 einen Werkzeugwechsel aufgrund der geometrischen Verhältnisse am Profil durchzuführen. Linie 16 ist Tangente an Punkt 17. Es wird hierzu die Schneidplatte 10, die auf dem Halter 11 angeordnet ist, verwendet. Diese Schneidplatte 10 kann wiederum ein Hochleistungsschneidstoff, wie z.B. Oxydkeramik, sein. Mit ihr kann bis zur Stelle 18 das Profil bearbeitet werden.

Die in Figur 3 beispielsweise vorgenommene Schnittaufteilung könnte grundsätzlich bei jedem verschlissenen Radsatz eingehalten werden. Es kämen dann im sinnvollen Wechsel Hochleistungsschneidstoffe und stoßunempfindliche Schneidstoffe zum Einsatz und es könnten durch die geeignete Anpassung der Schnittdaten überwiegend kurze Bruchspäne erzielt werden.

Bei veränderter Bearbeitung und vorheriger Prüfung des zu reprofilierenden Radsatzes ist eine Optimierung der Schnittaufteilung möglich, wie sie beispielsweise für einen Einzelfall in Figur 7 dargestellt ist. Für eine solche Optimierung der Schnittaufteilung ist jedoch die Kenntnis des Zustandes des Radsatzes erforderlich. Zunächst sind Hartstellen zu ermitteln. Diese können beispielsweise festgestellt werden durch Anlegen eines Härtetesters auf Vibrationsbasis bei rotierendem Radsatz an die aus Erfahrung bekannten Stellen des Profils. Weiterhin muß das Vorhandensein von Grat festgestellt werden, was durch einfache Inaugenscheinnahme gelingt. Gleiches gilt für die Überprüfung auf das Vorhandensein von Schweißraupen. Auch muß das Vorhandensein und die Lage von sogen. schwarzen Stellen ermittelt werden, was beispielsweise auf einem bekannten optischen Meßstand erfolgen kann.

Bei der vorbeschriebenen Überprüfung soll sich ein Radzustand ergeben haben, wie er in Figur 7 dargestellt ist. Es ist sofort zu erkennen, daß der Grat 4 wiederum bis zum Bereich der Außenplanfläche 12 mit Hartmetallschneidstoffen zerspant werden muß. Der sich anschließende, gepunktet dargestellte Bereich kann nun mit Hochleistungsschneidstoffen, wie beispielsweise Oxydkeramik, überdreht werden. Dieser Bereich ist bis sehr nahe an eine Hartstelle 19 herangeführt, deren Bereich 20 nun wieder mit Hartmetallschneidstoff und den zuzuordnenden Schnittdaten zerspant werden muß. Nach Zerspanung des Bereichs 20 kann die restliche Zerspanung des Profils nach Figur 7 wieder mit Hochleistungsschneidstoff durchgeführt werden.

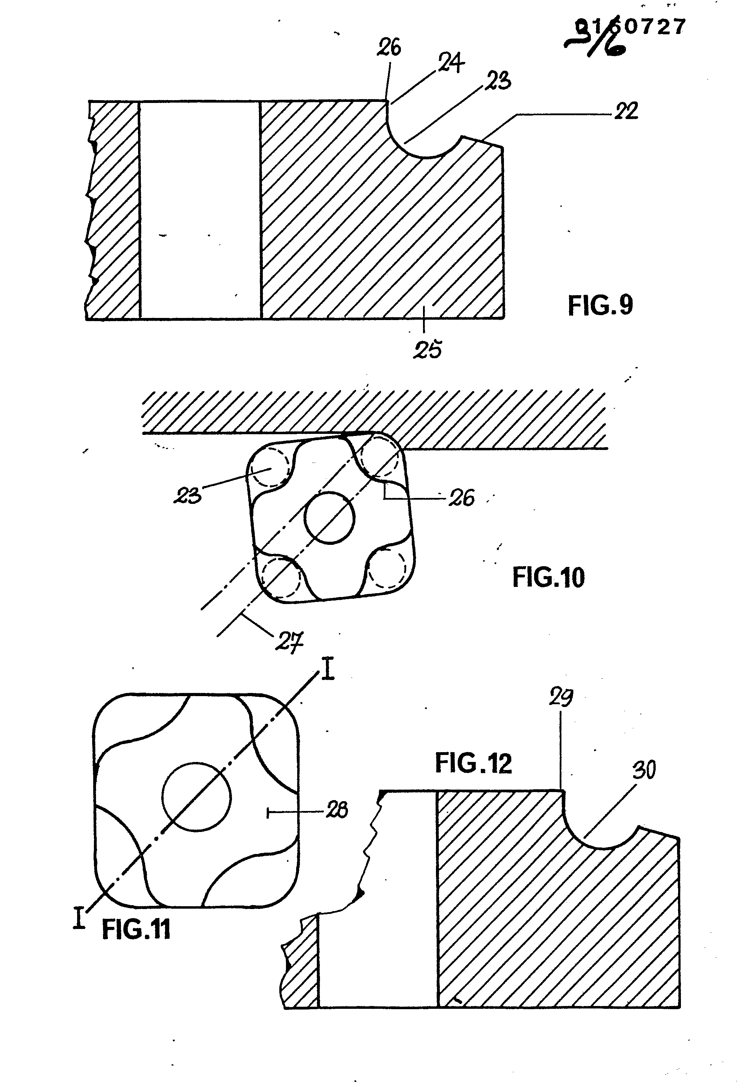

Es kann durchaus sinnvoll sein bei der Optimierung aller Arbeitsbedingungen, beispielsweise in Figur 7 für die Zerspanung des Grates 4 und für die Zerspanungsbearbeitung im Profilbereich 20 Hartmetallschneidplatten mit unterschiedlicher Schneidengeometrie zur Anpassung an den jeweiligen Arbeitsbereich zu verwenden. Gleiche Überlegungen gelten auch für die unterschiedlichen, von Hochleistungsschneidstoffen zu bearbeitenden Profilbereiche, die in Figur 7 punktiert dargestellt sind. Dies gilt auch für eine Schnittaufteilung nach dem Beispiel der Figur 3. Um unter allen Einsatzbedingungen kurzbrechende Späne zu erhalten, ist es erforderlich neben geeigneten Daten für die Schnittgeschwindigkeit und die Vorschubgeschwindigkeit auch eine geeignete geometrische Gestalt der jeweiligen Schneidplatte zu verwenden. Dies ist besonders wichtig für die Verwendung der stoßunempfindlichen Schneidstoffe. Das größte Problem hierbei ist, daß zwar genügend funktionssichere geometrische Gestaltungen solcher Schneidplatten bekannt sind, diese jedoch einen kurzen Bruchspan immer nur in einem bestimmten Bereich einer zu bearbeitenden Spantiefe ergeben. Da bei der Reprofilierung der Räder von Radsätzen dieser Spantiefenbereich in Profilrichtung starken Schwankungen unterworfen ist, treten ständig wechselnde Bedingungen für den Spanbruch auf. Daher ist es besonders sinnvoll den auftretenden Spantiefenbereich in mehrere kleinere Bereiche zu unterteilen, wobei diese kleineren Bereiche jeweils von einers speziellen Schneidplatte beherrscht werden können. Beispielsweise wird ein in der Meßkreisebene auftretender Spantiefenbereich von 8 mm in drei Bereiche unterteilt, nämlich 0-2 mm, 2-4 mm, 4-8mm. Für jeden dieser Bereiche wird eine besondere Schneidplatte vorgesehen, die in der geometrischen Form gleich, jedoch in der Formgebung der Spanleitflächen und der Spanbrecherflächen dem Zweck entsprechend verschieden geformt sind. Für den Bereich von 0-2 mm kann beispielsweise eine Schneidplatte gemäß Figur 8, 9 und 10 vorgesehen werden. Diese Schneidplatte ist eine Quadratplatte mit vier Schneidkanten (21a, 21b, 21c, 21d), die wahlweise zum Einsatz gebracht werden können. Bei dieser Schneidplatte beginnt die Spanfläche mit einer schmalen Phase 22, geht über in eine Mulde 23, die in einer Steilwand 24 von einigen Millimetern Überhöhung endet. Die Unterseite 25 dieser Platte ist eben. Die Mulde 23 ist etwa kugelförmig um das Zentrum der Kantenabrundung herum angeordnet. Die Spanbrecherkante 26 paßt sich dem hinteren Rand der Mulde 23 an und geht rechtwinklig auf die Schneidkanten zu. Die strichpunktierten Linien (Figur 10) stellen den Spanablauf dar.

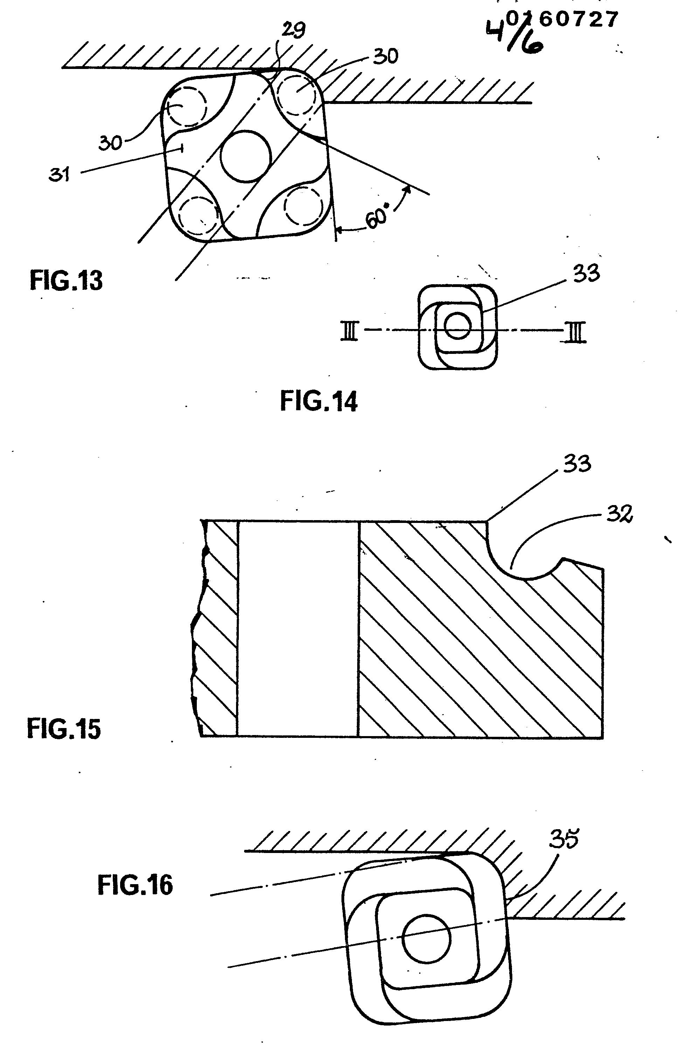

Für den Bereich 2-4 mm Spantiefe ist beispielsweise eine Hartmetallschneidplatte 28 (Figur 11) vorgesehen. Die geometrischen Verhältnisse sind die gleichen wie bei den Werkzeugen nach Figur 8-10, jedoch hat die Spanbrecherkante 29 einen anderen Verlauf. Die Spanbrecherkante 29 tangiert den Außenrand der Mulde 30 und läuft einerseits auf die Nebenschneide zu und läuft andererseits mit einem Bogen, dessen Radius größer ist als der Radius der Mulde 30, auf die Hauptschneide zu, so daß der Winkel zwischen Hauptschneide und Spanbrecherkante 29 ca. 60° beträgt. Es stellt sich ein Späneabfluß 31 ein, wie in Figur 13 dargestellt.

Eine Schneidplatte, wie sie in den Figuren 14 bis 16 dargestellt ist, wird eingesetzt bei Spantiefen bis zu 8 mm. Die geometrischen Verhältnisse sind wiederum die gleichen wie bei den Schneidplatten nach Figur 11 bis 13. Jedoch hat die Spanbrecherkante 33 und die Mulde 32 einen anderen Verlauf. Sie laufen parallel zur Kantenabrundung und zur Hauptschneide 35 und beginnen an der Schneidenrundung und enden etwa 2 mm hinter dem Bereich der maximalen Spantiefe. Es stellt sich dann ein Spänefluß 34 ein, wie in Figur 16 dargestellt.

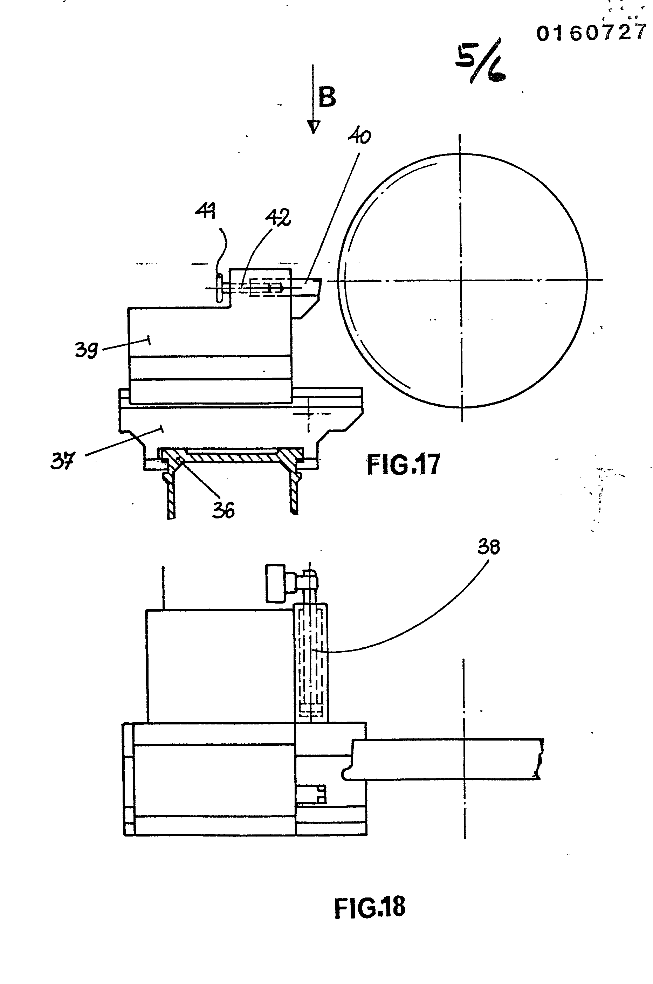

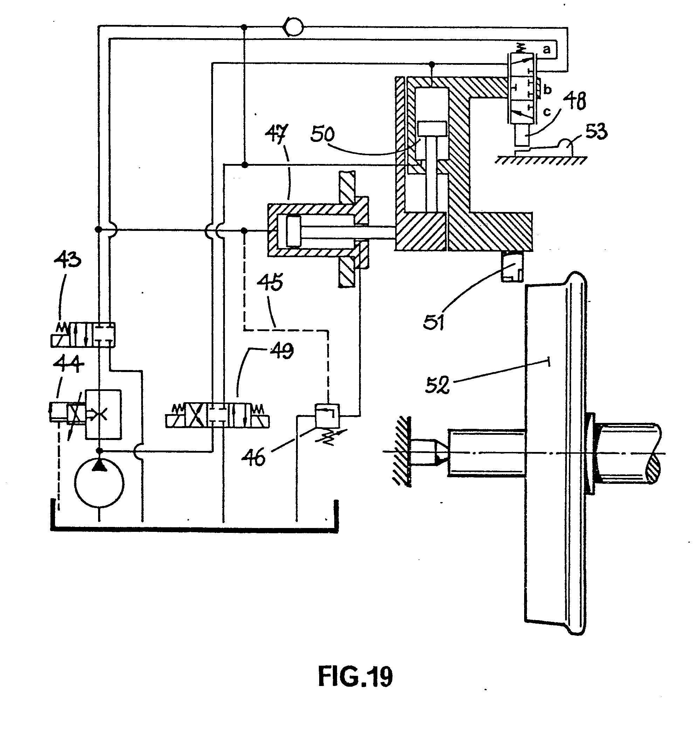

In den Figuren 17 und 18 ist der prinzipielle Aufbau eines für die gewünschte Reprofilierung geeigneten Supportes dargestellt. Auf den Längsführungen 36 eines nicht näher bezeichneten Maschinenbettes gleitet ein Längsschlitten 37, der über einen Zylinder 38 verschoben werden kann. Auf dem Längsschlitten 37 gleitet ein Planschlitten 39, auf welchem ein Werkzeugkopf 40 angeordnet ist. Werkzeugkopf 40 ist austauschbar befestigt. Es kann beispielsweise über das Handrad 41 mit der Spindel 42 der Werkzeugkopf 40 festgespannt werden. Der Werkzeugkopf 40 kann als handelsübliches Werkzeugsystem ausgebildet sein und es können hydraulische, elektrische oder mechanische Spanneinrichtungen zum Einsatz kommen. Das Auswechseln des Werkzeugkopfes 40 kann hierbei automatisch über einen Werkzeugwechsler oder einfach von Hand erfolgen. Ebenso ist es
möglich den Werkzeugkopf oder einzelne Werkzeuge in einem
Revolverkopf unterzubringen oder beispielsweise einen Teil
der Werkzeuge fest auf dem Support zu installieren und
einen anderen Teil auswechselbar zu befestigen. Ebenso kann
der die Werkzeuge oder das Werkzeugsystem tragende Support
nach Belieben hydraulisch, elektrisch oder numerisch
gesteuert sein. Das Ausführungsbeispiel zeigt einen für den
beabsichtigten Einsatz verwendbaren Support mit hydraulischer Kopiersteuerung. Der hierzugehörige Schaltplan ist
in Figur 19 dargestellt. Über einen Kopierfühler 48
bekannter Bauart wird das Zusammenspiel zwischen Planzylinder und Längszylinder gesteuert. Der Vorschub wird
eingeschaltet durch eine Schaltung des Ventils 43. Hierbei
wird die Vorschubölmenge bestimmt durch das Stromventil 44.
Der Fühler 48 befindet sich aufgrund des Federdruckes in
Stellung a und das Öl strömt in den Raum 50 des
Planzylinders, wodurch sich das Werkzeug 51 auf das Rad 52
zubewegt. Der Fühler 48 geht in die Stellung b wenn er auf
die Schablone 53 trifft. Hierdurch nun baut sich in der
Leitung 45 ein Druck auf, so daß sich das Vorspannventil 46
öffnet und hierdurch der Längszylinder 47 mit dem Längsvorschub beginnt. Der Fühler 48 wird durch diese Längsbewegung
je nach Neigung des Profils der Schablone 53 in die
Stellung a oder c gebracht. Durch den dadurch entstehenden
Druckabfall in Leitung 45 wird die Bewegung des Längszylinders 47 durch das Schließen des Vorspannventils 46
gestoppt und der Raum 50 des Planzylinders wird mit Öl
beaufschlagt.

Zur Durchführung eines Werkzeugwechsels wird über einen
erneuten Schaltvorgang des Ventils 43, mit der dieses in
die dargestellte Position geschaltet wird, der Vorschub
ausgeschaltet. Sodann muß eine Umdrehung des Radsatzes
abgewartet werden, damit die Werkzeugschneiden sich freischneiden können. Über eine entsprechende Schaltung des
Ventils 49 wird der Planschlitten nunmehr für den Werkzeugwechsel zurückgezogen. Die umgekehrte Schaltung des Ventils
49 bringt das Werkzeug wieder in Arbeitsposition. Die
Arbeitsposition wird hierbei geprüft durch den Fühler 48,
so daß das Werkzeug in genau richtiger Stelle wieder in
Eingriff kommt.

Mit dem erfindungsgemäßen Verfahren gelingt es erstmals
durch eine kombinierte Verwendung von Hochleistungsschneidstoffen und Hartmetallschneidstoffen über den gesamten
Profilbereich von zu reprofilierenden Rädern von Radsätzen
einen befriedigenden Spanbruch zu erzielen.

Liste der verwendeten Bezugszeichen

1   Meßkreisebene

2   Neuprofil

3   schwarze Stelle

4   Grat

5   Hartstelle

6   Schneidplatte

7   Werkzeughalter

8   Schneidplatte

9   Werkzeughalter

10  Schneidplatte

11  Werkzeughalter

12  Außenplanfläche

13  Bereich

14  Bereich

15  Bereich

16  Linie

17  Punkt auf dem Profil

18  Punkt auf dem Profil

19  Hartstelle

20  Bereich

21 a Schneidkante

21 b Schneidkante

21 c Schneidkante

21 d Schneidkante

22  Fase

23  Mulde

24  Steilwand

25  Unterseite

26  Spanbrecherkante

27  Spanablauf

28  Hartmetallschneidplatte

29  Kante

30  Mulde

31  Späneabfluß

| 32 | Mulde |
|----|-------|
| 33 | Spanbrecherkante |
| 34 | Späneabfluß |
| 35 | Hauptschneide |
| 36 | Längsführung |
| 37 | Längsschlitten |
| 38 | Längszylinder |
| 39 | Planschlitten |
| 40 | Werkzeugkopf |
| 41 | Handrad |
| 42 | Spindel |
| 43 | Ventil |
| 44 | Stromventil |
| 45 | Leitung |
| 46 | Vorspannventil |
| 47 | Längszylinder |
| 48 | Fühler |
| 49 | Ventil |
| 50 | Planzylinderraum |
| 51 | Werkzeug |
| 52 | Rad |
| 53 | Schablone |

<u>Schutzansprüche</u>

1. Verfahren zum Reprofilieren von Profilen von Radsätzen durch eine Drehbearbeitung dadurch gekennzeichnet, daß das Profil (Figur 1) in wechselndem Einsatz von stoßunempfindlichen Schneidstoffen und Hochleistungsschneidstoffen überdreht wird (Figur 3,7) unter Anpassung der Schnittdaten an den jeweils momentan verwendeten Schneidstoff, wobei der Hochleistungsschneidstoff in den Profilbereichen eingesetzt wird, die eine Stoßbelastung des Schneidstoffes nicht erwarten lassen, während in den übrigen Bereichen (13,20) die stoßunempfindlichen Schneidstoffe eingesetzt werden.

2. Verfahren nach Anspruch 1 dadurch gekennzeichnet, daß das Vorhandensein von Stoßbelastungen auslösenden Stellen (4,5,19) und deren Anordnung im Profilbereich vor oder während der Drehbearbeitung geprüft wird und in Abhängigkeit von diesem Prüfungsergebnis die Werkzeugzuordnung zu den unterschiedlichen Profilbereichen und die Auswahl und Einstellung der zuzuordnenden Schnittdaten erfolgt.

3. Verfahren nach Anspruch 1 dadurch gekennzeichnet, daß in den Profilbereichen (4,13), in denen nach der ·Erfahrung mindestens häufig Stoßbelastungen auftreten, unabhängig vom tatsächlichen Zustand dieser Profilbereiche im Einzelfall, stets stoßunempfindliche Schneidstoffe eingesetzt werden, während in den übrigen Profilbereichen stets Hochleistungsschneidstoffe eingesetzt werden.

4. Verfahren nach mindestens einem der Ansprüche 1 bis 3 dadurch gekennzeichnet, daß in den unterschiedlichen Profilbereichen, die von Hochleistungsschneidstoff einerseits und von stoßunempfindlichem Schneidstoff andererseits bearbeitet werden, die jeweils eingesetzte Schneidengeometrie und Spanleitstufe den Zerspanungsbedingungen des zu bearbeitenden Profilbereiches angepaßt sind.

1/6    0160727

FIG.1

FIG.2

FIG.3

0160727

FIG.4

FIG.5

FIG.6

FIG.7

FIG.8

3/6 0160727

FIG.9

FIG.10

FIG.12

FIG.11

0160727

FIG.13

FIG.14

FIG.15

FIG.16

B

40

44  42

39

37

36

**FIG.17**

38

**FIG.18**

**FIG.19**

Europäisches Patentamt

**EUROPÄISCHER RECHERCHENBERICHT**

0160727
Nummer der Anmeldung

EP 84 10 5312

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-C- 422 291 (WARNING) <br> * Insgesamt * <br><br> --- <br><br> | 1 | B 23 B 5/28 |
| A | GB-A-1 017 493 (HEGENSCHEIDT) <br><br> --- <br><br> | | |
| A | US-A-1 854 672 (ROBINSON) <br><br> ----- | | |

| RECHERCHIERTE SACHGEBIETE (Int. Cl.4) |
|---|
| B 23 B <br> B 23 C |

Der vorliegende Recherchenbericht wurde für alle Patentansprüche erstellt

| Recherchenort <br> DEN HAAG | Abschlußdatum der Recherche <br> 24-01-1985 | Prüfer <br> HUGGINS J.D. |
|---|---|---|